# EUROPÄISCHE PATENTANMELDUNG

(11) **EP 4 623 761 A1**
(43) Veröffentlichungstag der Anmeldung: **01.10.2025**
(21) Anmeldenummer: 25165919.9
(22) Anmeldetag: 25.03.2025
(51) Int. Cl.: A47F 7/04

(54) **VORRICHTUNG ZUR STABILEN POSITIONIERUNG EINES RADES**

(30) Priorität: 26.03.2024 DE 202024101503 U
(71) Anmelder: Knopke, André, 02633 Göda (DE)
(72) Erfinder: Knopke, André, 02633 Göda (DE)
(74) Vertreter: Kailuweit & Uhlemann Patentanwälte Partnerschaft mbB

(57) **Zusammenfassung**

Die Erfindung betrifft eine Vorrichtung zur stabilen Positionierung eines Rades umfassend zumindest eine erste Lagervorrichtung für eine erste Positionierungsvorrichtung, zumindest eine erste Positionierungsvorrichtung des Rades, wobei die erste Positionierungsvorrichtung mit der ersten Lagervorrichtung für die erste Positionierungsvorrichtung verbunden ist und um eine erste Drehachse beweglich ist, wobei die erste Positionierungsvorrichtung derart ausgebildet ist, dass diese genau zwei Auflagepunkte mit dem zu positionierenden Rad ausbildet, und die erste Lagervorrichtung für die erste Positionierungsvorrichtung sich auf der ersten Drehachse befindet sowie eine zweite Positionierungsvorrichtung zur Positionierung des Rades, sowie eine Verwendung der Vorrichtung.

## Beschreibung

Die Erfindung betrifft Vorrichtungen zur stabilen Positionierung eines Rades, insbesondere des Vorder- oder Hinterrades eines Zweirades.

Aus der GB 2 303 109 A ist Ständer für ein Fahrzeug mit Rädern bekannt, welcher einen Rahmen umfasst, der einen ersten Radeingriffsschuh mit offenem Ende aufweist, der um eine sich seitlich erstreckende Schwenkachse schwenkbar montiert ist, und einen zweiten Radeingriffsschuh, der in Längsrichtung der Bewegung eines Rades in den Ständer des ersten Schuhs beabstandet ist. Damit eine Kombination von Raddicken und -durchmessern in den Schuhen gehalten werden kann, weist jeder Schuh beabstandete, aufrechte Seitenwände auf, die einen V-förmigen Kanalabschnitt bilden, wobei der Kanal entlang der Länge ein im Allgemeinen V-förmiges Profil entlang seiner Länge aufweist. Nachteilig sind die Schuhe des Ständers nur für eine geringe Spanne von Raddicken und -Radien optimiert, wodurch die Stabilität des Standes von Zweirädern mit dickeren oder dünneren Rädern beeinträchtigt ist.

In der Druckschrift US 6,640,979 B1 wird ein Motorrad-Parkständer offenbart, der drei Schuhe verwendet, die so ausgerichtet sind, dass sie an unterschiedlichen Punkten am Umfang eines Rades in dieses eingreifen. Die Schuhe sind im Allgemeinen keilförmig oder haben eine Form, die dem Profil des Reifens ähnelt, so dass sie mit der Außenkante der Profilfläche des Reifens in Kontakt kommen. Die ersten beiden Schuhe sind schwenkbar an der Ständerkonstruktion befestigt und relativ zueinander fixiert. Ein dritter Schuh ist am vorderen Teil der Ständerkonstruktion befestigt, um die Vorwärtsbewegung des Rades zu stoppen und für Halt zu sorgen. Die nachteilig geringe Spanne von Raddicken und -Radien, für die eine spielraumfreie, stabile Positionierung möglich ist, ähnelt derjenigen der GB 2 303 109 A.

Die Druckschrift BR PI0702242-5 A2 bezieht sich auf eine Mehrpunktstütze mit einem Vorder- oder Hinterradbefestigungssystem für Zweiräder, die es dem befestigten Fahrzeug ermöglicht, immer in einer vertikalen Position zu bleiben. Sie ist im Wesentlichen dadurch gekennzeichnet, dass sie eine Mehrpunkthalterung für Motorräder ist, die das Halten eines Rades an drei Teilen des Reifens ermöglicht: an der Vorderseite, an der Unterseite und leicht in Richtung Unterseite versetzt an der Hinterseite. Die Halterung an der Hinter- und Unterseite funktioniert dabei mittels einer Schiene, die um eine zur Radachse parallele Achse schwenkbar ist. Da die Halterung entlang der Schiene an mehreren Punkten fixiert werden kann, erlaubt die Mehrpunktstütze die stabile Positionierung von Zweirädern mit einer größeren Spanne von Radradien als die in den vorher genannten Druckschriften offenbarten Vorrichtungen, jedoch einer nachteilig geringen Spanne von Raddicken.

Die in der Druckschrift WO 2010/002857 A2 offenbarte Vorrichtung zum Stützen eines Motorrads in aufrechter Position umfasst eine Basis und einen damit gekoppelten Radstopper. Eine schienenartige Wiege ist schwenkbar mit der Basis verbunden und umfasst ein Paar Klemmelemente, die verschiebbar damit verbunden sind. Nachteilig ist die Vorrichtung nur für einen Radradius spielraumfrei und für eine geringe Spanne von Raddicken optimiert.

Die in der Druckschrift WO 2011/146996 A1 beschriebene Erfindung stellt einen Fahrradträger bereit, der im Gebrauch dazu bestimmt ist, von einer Stütze, wie beispielsweise einer Wand, getragen zu werden. Der Träger umfasst eine Basis, die an der Stütze befestigt werden kann, und ein Stützelement, das schwenkbar mit der Basis verbunden ist, um es dem Stützelement zu ermöglichen, sich um eine erste Achse zwischen einer Position neben der Stütze zu bewegen, wobei sich der Fahrradträger in einer ersten Position befindet und einer Position, in der sich das Stützelement von der Stütze nach außen erstreckt, wobei sich der Fahrradträger in einer zweiten Position befindet. Das Stützelement stellt einen ersten Raum bereit, der so konfiguriert ist, dass er einen Teil des Rads aufnimmt, wobei die Breite des ersten Raums kleiner wird, wenn das Rad darin aufgenommen wird. Nachteilig benötigt die Vorrichtung eine Wand oder ähnliche Stütze und kann nicht freistehend auf den Boden aufgestellt oder fixiert werden.

In der Druckschrift JP 3155357 U wird eine Abstellvorrichtung für ein Zweiradfahrzeug offenbart, die es ermöglicht, das Zweiradfahrzeug mit geringem Kraftaufwand herauszunehmen. Die Abstellvorrichtung umfasst einen Vorderradeintritt, der sich in der Vorwärts- und RückwärtsRichtung erstreckt, einen vorderen Haltekörper, der auf dem Vorderradeintritt angeordnet ist und den vorderen Teil des Vorderrades hält, einen unteren Haltekörper, der auf der Hinterseite des Vorderradeintritts angeordnet ist und den unteren Teil des Vorderrades hält, einen Haltemechanismus, durch den der unteren Haltekörper auf einer horizontale Achse orthogonal zu der Vorne-Hinten-Richtung gelagert ist und zwischen einer Bereitschaftsposition und einer Halteposition drehbar ist. Ein Schiebemechanismus erlaubt dem Haltemechanismus Beweglichkeit in der Vorder-/Rückwärtsrichtung, wodurch eine große Spanne von Radradien, jedoch nachteilig eine geringe Spanne von Raddicken spielraumfrei positionierbar ist.

Die Druckschrift CN 105835996 A beschreibt eine einstellbare Schnellparkvorrichtung, die einen Stützrahmenkörper, einen verstellbaren, für ein Rad vorgesehenen Anschlagbügel und eine Drehvorrichtung umfasst. Der Stützrahmenkörper umfasst eine A-förmige Halterung und Querstange an der Spitze der A-Form. Eine vertikale Stützstange ist an der Verbindungsstelle der A-förmigen Halterung und der Querstange installiert. Auf der vertikalen Stützstange ist mittels einer Stiftwelle ein abgebrochen V-förmiger Anschlagbügel verstellbar angebracht. Auf dem Querbalken der A-Form ist eine V-förmige untere Halterung drehbar gelagert, die für ein Rad vorgesehen ist. Nachteilig ermöglicht die Schnellparkvorrichtung eine spielraumfreie und stabile Positionierung nur von Rädern bestimmter Radien und einer geringen Spanne von Raddicken.

Nachteilig am Stand der Technik ist die geringe Spanne von Radradien und -Dicken von Zweirädern, denen eine spielraumfreie und stabile Positionierung ermöglicht wird, oder die Notwendigkeit einer Stütze, wie beispielsweise einer Wand.

Aufgabe ist es daher, ein eine Vorrichtung zur stabilen Positionierung eines Rades bereitzustellen, welches die Nachteile des Standes der Technik überwindet.

Erfindungsgemäß wird die Aufgabe durch Vorrichtung zur stabilen Positionierung eines Rades gemäß Patentanspruch 1 gelöst. Vorteilhafte Ausgestaltungen der Erfindung sind in den abhängigen Ansprüchen angegeben.

Ein erster Aspekt der Erfindung betrifft eine Vorrichtung zur stabilen Positionierung eines Rades umfassend:
- Zumindest eine erste Lagervorrichtung für eine erste Positionierungsvorrichtung
- Zumindest eine erste Positionierungsvorrichtung des Rades, wobei die erste Positionierungsvorrichtung mit der ersten Lagervorrichtung für die erste Positionierungsvorrichtung verbunden ist und um eine erste Drehachse beweglich ist, wobei die erste Positionierungsvorrichtung derart ausgebildet ist, dass diese genau zwei Auflagepunkte mit dem zu positionierenden Rad ausbildet, und die erste Lagervorrichtung für die erste Positionierungsvorrichtung sich auf der ersten Drehachse befindet
- eine zweite Positionierungsvorrichtung zur Positionierung des Rades.

Die erste Positionierungsvorrichtung umfasst in Ausführungsformen einen durch ein konvexes erstes Sechseck gebildeten ersten Bügel, wobei zwei parallele Seiten des ersten Bügels zwei gegenüberliegende Seiten des ersten Sechsecks bilden und jeweils zwei der übrigen vier Seiten des ersten Bügels die Schenkel gleichschenkliger Dreiecke bilden, deren Spitzen sich spiegelbildlich gegenüberliegende Punkte des ersten Sechsecks bilden.

In Ausführungsformen ist die erste Drehachse senkrecht zu den zwei parallelen Seiten des ersten Bügels, und schneidet diese zwei Seiten des ersten Bügels.

Die erste Positionierungsvorrichtung umfasst in Ausführungsformen mindestens ein erstes Verbindungsstück der ersten Positionierungsvorrichtung, welches mindestens eine erste der zwei parallelen Seiten des ersten Bügels, mit der ersten Lagervorrichtung für die erste Positionierungsvorrichtung verbindet.

Bevorzugt beträgt der innere Abstand zwischen den Ecken des ersten Bügels, welche jeweils Spitzen der gleichschenkligen Dreiecke bilden, zwischen 130 mm und 920 mm, besonders bevorzugt zwischen 200 mm und 690 mm.

Bevorzugt beträgt der innere Abstand zwischen den beiden parallelen Seiten des ersten Bügels zwischen 17 mm und 510 mm, besonders bevorzugt zwischen 20 mm und 130 mm.

Die Vorrichtung weist in Ausführungsformen zumindest eine zweite Lagervorrichtung für die erste Positionierungsvorrichtung auf und die erste Positionierungsvorrichtung ist mit der zweiten Lagervorrichtung für die erste Positionierungsvorrichtung verbunden, wobei die zweite Lagervorrichtung auf der ersten Drehachse liegt.

In Ausführungsformen ist die zweite Lagervorrichtung für die erste Positionierungsvorrichtung zweckmäßig mit der Seite der ersten Positionierungsvorrichtung verbunden, die der mit der ersten Lagervorrichtung für die erste Positionierungsvorrichtung verbundenen Seite der ersten Positionierungsvorrichtung gegenüber liegt.

Die erste Positionierungsvorrichtung umfasst in Ausführungsformen ein zweites Verbindungsstück der ersten Positionierungsvorrichtung, welches eine zweite der zwei parallelen Seiten des ersten Bügels, die sich gegenüberliegende Seiten des ersten Rechtecks bilden, mit der zweiten Lagervorrichtung für die erste Positionierungsvorrichtung verbindet.

In Ausführungsformen ist die zweite Positionierungsvorrichtung derart ausgebildet, dass diese höchstens zwei Auflagepunkte mit dem zu positionierenden Rad ausbildet.

In Ausführungsformen ist entweder die erste Positionierungsvorrichtung oder die zweite Positionierungsvorrichtung parallel zur Richtung des Schwerefeldes angeordnet.

Das bedeutet in den meisten praktischen Anwendungsfällen, dass die erste Positionierungsvorrichtung oder die zweite Positionierungsvorrichtung senkrecht zum Horizont angeordnet ist.

Der Schwerpunkt der ersten Positionierungsvorrichtung liegt in Ausführungsformen auf der ersten Drehachse.

Dies bedeutet, dass die erste Drehachse einer Hauptträgheitsachse der ersten Positionierungsvorrichtung entspricht. Dadurch wird gewährleistet, dass die erste Positionierungsvorrichtung keine Unwucht aufweist, welche die stabile Positionierung eines Rades erschweren würde, oder - beispielsweise im Falle eines ultraleichten Rennrades - sogar unmöglich machen könnte.

In alternativen Ausführungsformen zu den in den letzten zwei Absätzen genannten Ausführungsformen ist die erste Drehachse so vom Schwerpunkt der ersten Positionierungsvorrichtung (2) versetzt ausgelegt, dass ein in die Vorrichtung zu positionierendes Rad mit einer geringstmöglichen Anhebung in die Vorrichtung schiebbar ist. Falls die erste Drehachse weiter vom Boden entfernt ist als der geometrische Schwerpunkt der zweiten Positionierungsvorrichtung, ist die erste Positionierungsvorrichtung dadurch, dass ihr Schwerpunkt nicht auf der ersten Drehachse liegt, ohne äußere Krafteinwirkung und ohne ein darin positioniertes Rad senkrecht angeordnet. Falls die erste Drehachse näher am Boden ist als der geometrische Schwerpunkt der zweiten Positionierungsvorrichtung, ist die erste Drehachse so vom Schwerpunkt versetzt ausgelegt, dass die erste Positionierungsvorrichtung ohne äußere Krafteinwirkung, in die der zweiten Positionierungsvorrichtung entgegengesetzten Richtung gekippt ist.

In Ausführungsformen weist die Vorrichtung zumindest eine erste Lagervorrichtung für die zweite Positionierungsvorrichtung auf, wobei die erste Lagervorrichtung für die zweite Positionierungsvorrichtung mit der zweiten Positionierungsvorrichtung verbunden ist, die zweite Positionierungsvorrichtung um eine zweite Drehachse beweglich ist, wobei die zweite Positionierungsvorrichtung derart ausgebildet ist, dass diese genau zwei Auflagepunkte mit dem zu positionierenden Rad ausbildet und die erste Lagervorrichtung für die zweite Positionierungsvorrichtung sich auf der zweiten Drehachse befindet.

Die zweite Positionierungsvorrichtung umfasst in Ausführungsformen einen durch ein konvexes zweites Sechseck gebildeten zweiten Bügel, wobei zwei parallele Seiten des zweiten Bügels zwei gegenüberliegende Seiten des zweiten Sechsecks bilden und jeweils zwei der übrigen vier Seiten des zweiten Bügels die Schenkel gleichschenkliger Dreiecke bilden, deren Spitzen sich spiegelbildlich gegenüberliegende Punkte des zweiten Sechsecks bilden.

In Ausführungsformen ist die zweite Drehachse senkrecht zu den zwei parallelen Seiten des zweiten Bügels und schneidet diese zwei Seiten des zweiten Bügels.

Die zweite Positionierungsvorrichtung umfasst in Ausführungsformen mindestens ein erstes Verbindungsstück der zweiten Positionierungsvorrichtung, welches mindestens eine erste der zwei parallelen Seiten des zweiten Bügels mit der ersten Lagervorrichtung für die zweite Positionierungsvorrichtung verbindet.

Bevorzugt beträgt der innere Abstand zwischen den Ecken des zweiten Bügels, welche jeweils Spitzen der gleichschenkligen Dreiecke bilden, deren Schenkel jeweils zwei der übrigen vier Seiten des zweiten Bügels bilden, zwischen 130 mm und 920 mm, besonders bevorzugt zwischen 200 mm und 690 mm.

Bevorzugt beträgt der innere Abstand zwischen den beiden parallelen Seiten des zweiten Bügels zwischen 17 mm und 510 mm, besonders bevorzugt zwischen 20 mm und 130 mm.

Ausführungsformen einer zweiten Konstruktionsart weisen eine erste und/oder zweite Positionierungsvorrichtung mit einem ersten und/oder zweiten Bügel einer zweiten Konstruktionsart auf, dadurch gekennzeichnet dass der Bügel fünf Seiten aufweist, von denen vier Seiten die Schenkel gleichschenkliger Dreiecke bilden, deren Spitzen sich spiegelbildlich gegenüberliegende Punkte bilden und von denen ein Paar sich gegenüberliegender Schenkel der gleichschenkligen Dreieckemittels der übrigen Seite des Bügels zweiter Konstruktionsart miteinander verbunden sind.

Die Positionierungsvorrichtung mit Bügel zweiter Konstruktionsart umfasst in Ausführungsformen mindestens das erste Verbindungsstück der ersten Positionierungsvorrichtung oder das erste Verbindungsstück der zweiten Positionierungsvorrichtung, welches die übrige Seite des Bügels zweiter Konstruktionsart, welche das eine Paar sich gegenüberliegender Schenkel der gleichschenkligen Dreiecke miteinander verbindet, mit der ersten Lagervorrichtung für die erste oder zweite Positionierungsvorrichtung verbindet.

Weitere Konstruktionsarten sind in den Ausführungsbeispielen angegeben.

In Ausführungsformen weist die zweite Positionierungsvorrichtung zumindest eine zweite Lagervorrichtung für die zweite Positionierungsvorrichtung auf, wobei die zweite Positionierungsvorrichtung mit der zweiten Lagervorrichtung für die zweite Positionierungsvorrichtung verbunden ist und wobei die zweite Lagervorrichtung der zweiten Positionierungsvorrichtung auf der zweiten Drehachse liegt.

In Ausführungsformen ist die zweite Lagervorrichtung für die zweite Positionierungsvorrichtung zweckmäßig mit der Seite der zweiten Positionierungsvorrichtung verbunden, die der mit der ersten Lagervorrichtung für die zweite Positionierungsvorrichtung verbundenen Seite der zweiten Positionierungsvorrichtung gegenüber liegt.

Die zweite Positionierungsvorrichtung umfasst in Ausführungsformen ein zweites Verbindungsstück der zweiten Positionierungsvorrichtung, welches eine zweite der zwei parallelen Seiten des zweiten Bügels mit der zweiten Lagervorrichtung für die zweite Positionierungsvorrichtung verbindet.

Der Schwerpunkt der zweiten Positionierungsvorrichtung liegt in Ausführungsformen auf der zweiten Drehachse.

Dies bedeutet, dass die zweite Drehachse einer Hauptträgheitsachse der zweiten Positionierungsvorrichtung entspricht. Dadurch wird gewährleistet, dass die zweite Positionierungsvorrichtung keine Unwucht aufweist, welche die stabile Positionierung eines Rades erschweren würde, oder - beispielsweise im Falle eines ultraleichten Rennrades - sogar unmöglich machen könnte.

In weiteren Ausführungsformen zu den in den letzten zwei Absätzen genannten Ausführungsformen ist die zweite Drehachse so vom Schwerpunkt der zweiten Positionierungsvorrichtung versetzt ausgelegt, dass ein in die Vorrichtung zu positionierendes Rad mit einer geringstmöglichen Anhebung in die Vorrichtung schiebbar ist.

Falls die zweite Drehachse weiter vom Boden entfernt ist als der geometrische Schwerpunkt der ersten Positionierungsvorrichtung, ist die zweite Positionierungsvorrichtung dadurch, dass ihr Schwerpunkt nicht auf der zweiten Drehachse liegt, ohne äußere Krafteinwirkung und ohne ein darin positioniertes Rad senkrecht angeordnet. Falls die zweite Drehachse näher am Boden ist als der geometrische Schwerpunkt der ersten Positionierungsvorrichtung, ist die zweite Drehachse so vom Schwerpunkt versetzt ausgelegt, dass zweite Positionierungsvorrichtung ohne äußere Krafteinwirkung, in die der ersten Positionierungsvorrichtung entgegengesetzten Richtung gekippt ist.

In Ausführungsformen weist die Vorrichtung einen ersten Rahmen auf und die erste Lagervorrichtung für die erste Positionierungsvorrichtung befindet sich im ersten Rahmen.

Die zweite Lagervorrichtung für die erste Positionierungsvorrichtung befindet sich in Ausführungsformen im ersten Rahmen.

In Ausführungsformen weist die Vorrichtung einen zweiten Rahmen auf und die zweite Positionierungsvorrichtung ist unbeweglich am zweiten Rahmen befestigt.

In Ausführungsformen weist die Vorrichtung einen zweiten Rahmen auf und die erste Lagervorrichtung für die zweite Positionierungsvorrichtung befindet sich im zweiten Rahmen.

Die zweite Lagervorrichtung für die zweite Positionierungsvorrichtung befindet sich in Ausführungsformen im zweiten Rahmen.

In Ausführungsformen weisen/weist der erste Rahmen und/oder der zweite Rahmen 2 bis 30, bevorzugt 5 bis 14 weitere Lagervorrichtungen auf, die jeweils dazu eingerichtet sind, mit der ersten Positionierungsvorrichtung, oder mit der zweiten Positionierungsvorrichtung verbunden zu werden.

Die erste, zweite oder weiteren Lagervorrichtungen können als Gleitlager, Gummilager, Wälzlager, Achslenkerlager, Magnetlager oder Nadellager ausgebildet sein.

Zumindest eine der um eine Drehachse beweglichen Positionierungsvorrichtungen ist in Ausführungsformen durch Sicherungsmittel mit zumindest einer der Lagervorrichtungen lösbar verbunden.

In Ausführungsformen weist die zweite Positionierungsvorrichtung eine Schiene auf, deren Profil dazu geeignet ist, ein Rad zu führen.

Die zweite Positionierungsvorrichtung weist in Ausführungsformen eine Schiene mit einem V- oder U-förmigem Profil auf.

In Ausführungsformen, in denen die zweite Positionierungsvorrichtung parallel zur Richtung des Schwerefeldes angeordnet ist und eine Schiene aufweist, weist die Schiene bevorzugt eine Länge von 120 mm bis 640 mm, besonders bevorzugt eine Länge von 190 mm bis 470 mm auf. Bevorzugt beträgt der Abstand zwischen dem Boden, auf dem sich die Vorrichtung zur stabilen Positionierung eines Rades befindet und dem unteren Ende der Schiene zwischen 0 mm und 350 mm.

In Ausführungsformen ist die erste Positionierungsvorrichtung parallel zur Richtung des Schwerefeldes angeordnet und weist die zweite Positionierungsvorrichtung eine Schiene auf, wobei die Schiene vorteilhaft aus der Perspektive eines zu positionierenden Rades zunächst in einem ersten Abschnitt über eine Länge zwischen 40 mm und 210 mm in einem Winkel zwischen 15° und 45° bezüglich zur Horizontalen ansteigend, dann in einem zweiten Abschnitt über eine Länge zwischen 50 mm und 300 mm in einem Winkel zwischen 15° und 45° bezüglich zur Horizontalen absteigend und zuletzt in einem dritten Abschnitt über eine Länge zwischen 62 mm und 310 mm in einem Winkel zwischen 0° und 35° bezüglich zur Horizontalen waagerecht oder ansteigend verläuft. Durch einen solchen Verlauf der Schiene wird verhindert, dass ein in der Vorrichtung positioniertes Zweirad nach hinten aus der Vorrichtung herausrollt.

In Ausführungsformen ist die erste Lagervorrichtung für die erste Positionierungsvorrichtung und/oder die zweite Positionierungsvorrichtung unbeweglich an einer Wand angeordnet.

In Ausführungsformen ist die zweite Lagervorrichtung für die erste Positionierungsvorrichtung und/oder die erste Lagervorrichtung für die zweite Positionierungsvorrichtung und/oder die zweite Lagervorrichtung für die zweite Positionierungsvorrichtung und/oder mindestens eine der weiteren Lagervorrichtungen in einer Wand angeordnet.

In Ausführungsformen weist die Vorrichtung einen Pfosten auf und die erste Lagervorrichtung für die erste Positionierungsvorrichtung ist am Pfosten angeordnet oder die zweite Positionierungsvorrichtung ist unbeweglich am Pfosten angeordnet.

In Ausführungsformen weist die Vorrichtung einen ersten Pfosten auf und die erste Lagervorrichtung für die erste Positionierungsvorrichtung ist am ersten Pfosten angeordnet.

In Ausführungsformen weist die Vorrichtung einen zweiten Pfosten auf und die zweite Lagervorrichtung für die erste Positionierungsvorrichtung ist am zweiten Pfosten angeordnet.

In Ausführungsformen weist die Vorrichtung einen dritten Pfosten auf und die erste Lagervorrichtung für die zweite Positionierungsvorrichtung ist am dritten Pfosten angeordnet.

In Ausführungsformen weist die Vorrichtung einen vierten Pfosten auf und die zweite Lagervorrichtung für die zweite Positionierungsvorrichtung ist am vierten Pfosten angeordnet.

In Ausführungsformen ist oder sind eine oder mehrere der weiteren Lagervorrichtungen am ersten und/oder am zweiten und/oder am dritten und/oder am vierten Pfosten angeordnet.

In Ausführungsformen weist die Vorrichtung einen weiteren Pfosten auf und die zweite Positionierungsvorrichtung ist unbeweglich am weiteren Pfosten angeordnet.

In Ausführungsformen ist die erste Positionierungsvorrichtung und/oder die zweite Positionierungsvorrichtung dazu ausgelegt, dass ein Reifen eines in der Vorrichtung zu positionierenden Rades durch seinen Reifendruck in die Positionierungsvorrichtung festklemmbar ist und dabei das Rad kraftschlüssig in der Vorrichtung positionierbar ist.

In Ausführungsformen weist die erste Positionierungsvorrichtung und/oder die zweite Positionierungsvorrichtung mindestens ein Dehnungsmittel auf, welches dazu ausgelegt ist, die erste Positionierungsvorrichtung und/oder die zweite Positionierungsvorrichtung entlang einer Richtung zu dehnen, die parallel zur Radebene des in die Vorrichtung zu positionierenden Rades ist.

In Ausführungsformen weist das mindestens eine Dehnungsmittel mindestens eine Teleskopführung und/oder mindestens eine Feder auf.

Vorteilhaft ist in Ausführungsformen die Vorrichtung aus einem Material ausgebildet, s ausgewählt aus mindestens einem Metall und/oder mindestens einer Metalllegierung und/oder Karbon und/oder mindestens einen Verbundwerkstoff.

Besonders vorteilhaft umfasst das Material, aus dem die Vorrichtung ausgebildet ist, eine Stahllegierung.

Ein weiterer Aspekt der Erfindung betrifft eine Verwendung einer erfindungsgemäßen Vorrichtung und/oder ihrer Ausführungsformen zur stabilen Positionierung eines Rades.

Die Erfindung ist nicht auf die dargestellten und beschriebenen Ausführungsformen beschränkt, sondern umfasst auch alle im Sinne der Erfindung gleich wirkenden Ausführungsformen. Ferner ist die Erfindung auch nicht auf die speziell beschriebenen Merkmalskombinationen beschränkt, sondern kann auch durch jede beliebige andere Kombination von bestimmten Merkmalen aller insgesamt offenbarten Einzelmerkmale definiert sein, sofern sich die Einzelmerkmale nicht gegenseitig ausschließen, oder eine spezifische Kombination von Einzelmerkmalen nicht explizit ausgeschlossen ist.

### Ausführungsbeispiele

Nachfolgend soll die Erfindung anhand dreier Ausführungsbeispiele eingehender erläutert werden. Die Ausführungsbeispiele beziehen sich auf Vorrichtungen zur stabilen Positionierung eines Rades, welche zumindest eine um jeweils eine Drehachse bewegliche Positionierungsvorrichtung aufweist und soll dabei die Erfindung beschreiben ohne diese zu beschränken.

### Anhand von Zeichnungen wird die Erfindung näher erläutert. Dabei zeigen

- **Fig. 1**: eine Seitenansicht eines ersten Ausführungsbeispiels einer Vorrichtung zur stabilen Positionierung eines Rades mit einem Zweirad (1.1a), dessen Vorderrad stabil in der Vorrichtung positioniert ist, wobei die zweite Positionierungsvorrichtung (4.1) an einem Pfosten (P) befestigt und parallel zur Richtung des Schwerefeldes angeordnet ist und die zweite Positionierungsvorrichtung (4.1) eine Schiene mit einem V-förmigem Profil aufweist und wobei das abgebildete Zweirad nicht Gegenstand der Erfindung ist,
- **Fig. 2**: eine Seitenansicht des ersten Ausführungsbeispiels einer Vorrichtung zur stabilen Positionierung eines Rades (1.1b),
- **Fig. 3**: eine Vorderansicht des ersten Ausführungsbeispiels einer Vorrichtung zur stabilen Positionierung eines Rades (1.1b),
- **Fig. 4**: eine Draufsicht des ersten Ausführungsbeispiels einer Vorrichtung zur stabilen Positionierung eines Rades (1.1b),

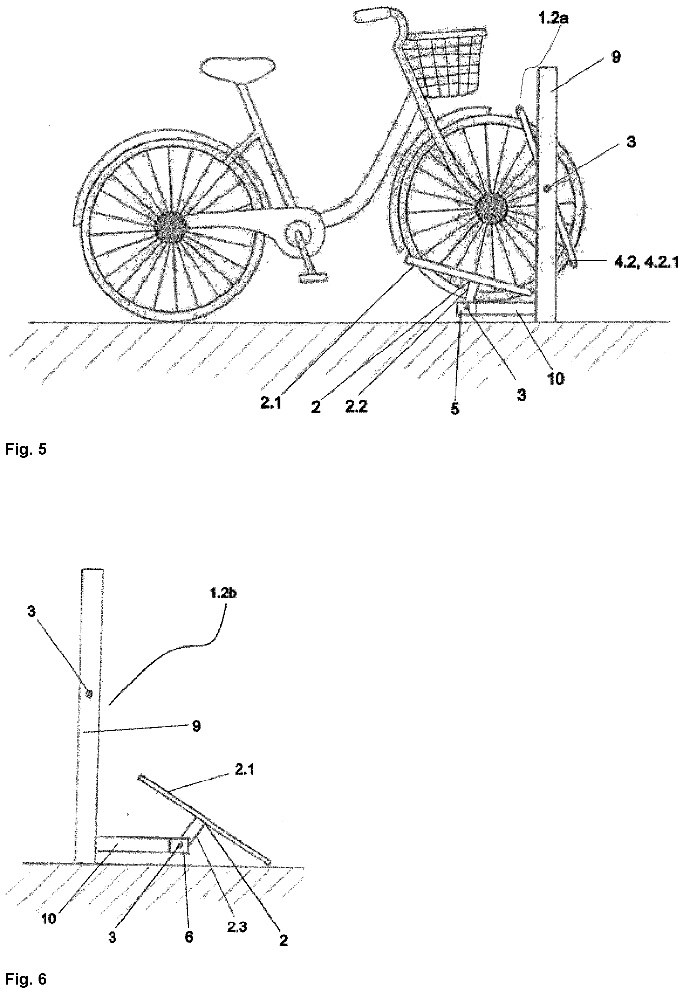

- **Fig. 5**: eine Seitenansicht eines zweiten Ausführungsbeispiels einer Vorrichtung zur stabilen Positionierung eines Rades mit einem Zweirad (1.2a), dessen Vorderrad stabil in der Vorrichtung positioniert ist, wobei die zweite Positionierungsvorrichtung (4.2) eine erste Lagervorrichtung (7) und eine zweite Lagervorrichtung (8) aufweist, die zweite Positionierungsvorrichtung (4.2) mit der ersten Lagervorrichtung (7) für die zweite Positionierungsvorrichtung und der zweiten Lagervorrichtung (8) für die zweite Positionierungsvorrichtung verbunden ist, die zweite Positionierungsvorrichtung (4.2) um eine zweite Drehachse beweglich ist, wobei die zweite Positionierungsvorrichtung (4.2) derart ausgebildet ist, dass diese genau zwei Auflagepunkte mit dem zu positionierenden Rad ausbildet und die erste Lagervorrichtung (7) und die zweite Lagervorrichtung (8) sich auf der zweiten Drehachse befinden und wobei das abgebildete Zweirad nicht Gegenstand der Erfindung ist,
- **Fig. 6**: eine Seitenansicht des zweiten Ausführungsbeispiels einer Vorrichtung zur stabilen Positionierung eines Rades (1.2b),
- **Fig. 7**: eine Vorderansicht des zweiten Ausführungsbeispiels einer Vorrichtung zur stabilen Positionierung eines Rades (1.2b),
- **Fig. 8**: eine Draufsicht des zweiten Ausführungsbeispiels einer Vorrichtung zur stabilen Positionierung eines Rades (1.2b),
- **Fig. 9**: eine Seitenansicht eines dritten Ausführungsbeispiels einer Vorrichtung zur stabilen Positionierung eines Rades mit einem Zweirad (1.3a), dessen Vorderrad stabil in der Vorrichtung positioniert ist, wobei die erste Positionierungsvorrichtung (2) parallel zur Richtung des Schwerefeldes angeordnet ist und die zweite Positionierungsvorrichtung (4.3) eine Schiene mit einem V-förmigem Profil aufweist und wobei das abgebildete Zweirad nicht Gegenstand der Erfindung ist,
- **Fig. 10**: eine Vorderansicht des dritten Ausführungsbeispiels einer Vorrichtung zur stabilen Positionierung eines Rades (1.3b),
- **Fig. 11**: eine Draufsicht des dritten Ausführungsbeispiels einer Vorrichtung zur stabilen Positionierung eines Rades (1.3b),
- **Fig. 12**: eine Positionierungsvorrichtung (11) mit Bügel zweiter Konstruktionsart (11.1),
- **Fig. 13**: eine Positionierungsvorrichtung (12.1) mit Bügel dritter Konstruktionsart (12.1.1),
- **Fig. 14**: eine Positionierungsvorrichtung (12.2) mit Bügel vierter Konstruktionsart (12.2.1),
- **Fig. 15**: eine Positionierungsvorrichtung (13.1) mit Bügel fünfter Konstruktionsart (13.1.1),
- **Fig. 16**: eine Positionierungsvorrichtung (13.2) mit Bügel sechster Konstruktionsart (12.2.1),
- **Fig. 17**: eine Positionierungsvorrichtung (13.3) mit Bügel siebenter Konstruktionsart (13.3.1).

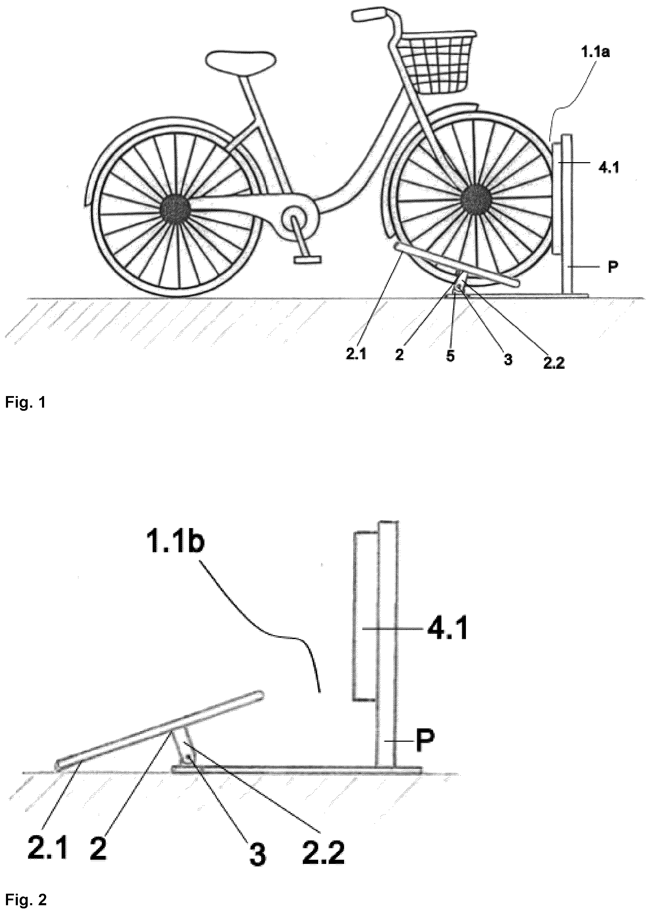

**Figur 1** zeigt eine Seitenansicht des ersten Ausführungsbeispiels einer Vorrichtung zur stabilen Positionierung eines Rades mit einem Zweirad (1.1a), dessen Vorderrad stabil in der Vorrichtung positioniert ist, wobei die erste Positionierungsvorrichtung (2) mit auf einer ersten Drehachse liegenden Sicherungsmitteln (3) an einer ersten Lagervorrichtung (5) und einer zweiten Lagervorrichtung (6) drehbar gelagert ist und wobei die zweite Positionierungsvorrichtung (4.1) an einem Pfosten (P) befestigt und parallel zur Richtung des Schwerefeldes angeordnet ist und die zweite Positionierungsvorrichtung (4.1) eine Schiene mit einem V-förmigem Profil aufweist. Das abgebildete Zweirad ist nicht Gegenstand der Erfindung.

**Figur 2** zeigt eine Seitenansicht des ersten Ausführungsbeispiels einer Vorrichtung zur stabilen Positionierung eines Rades (1.1b).

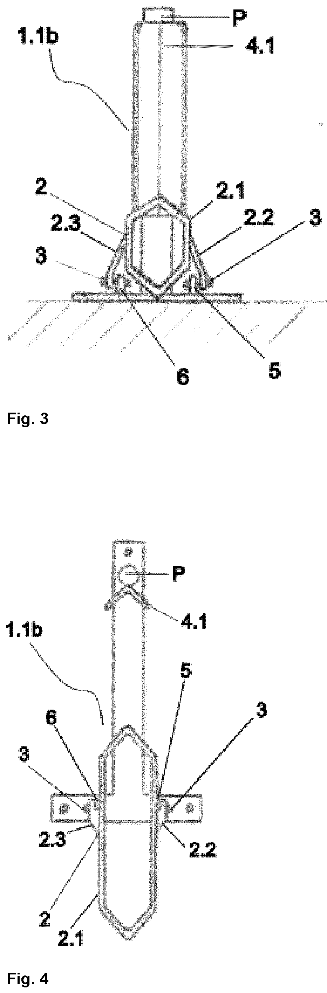

**Figur 3** zeigt eine Vorderansicht des ersten Ausführungsbeispiels einer Vorrichtung zur stabilen Positionierung eines Rades (1.1b), bei der die erste Positionierungsvorrichtung (2) mit Sicherungsmitteln (3) an den zwei auf der Drehachse liegenden Lagervorrichtungen (5, 6) drehbar gelagert ist. Die erste Positionierungsvorrichtung (2) umfasst einen durch ein konvexes erstes Sechseck gebildeten ersten Bügel (2.1), wobei zwei parallele Seiten des ersten Bügels (2.1) zwei gegenüberliegende Seiten des ersten Sechsecks bilden und jeweils zwei der übrigen vier Seiten des ersten Bügels (2.1) die Schenkel gleichschenkliger Dreiecke bilden, deren Spitzen sich spiegelbildlich gegenüberliegende Punkte des ersten Sechsecks bilden.

Die erste Positionierungsvorrichtung (2) umfasst ferner zwei Verbindungsstücke (2.2, 2.3), welche die zwei parallelen Seiten des ersten Bügels (2.1) mit der ersten und der zweiten Lagervorrichtung (5, 6) verbinden.

Der innere Abstand zwischen den Ecken des ersten Bügels (2.1), welche jeweils Spitzen der gleichschenkligen Dreiecke bilden, deren Schenkel jeweils zwei der übrigen vier Seiten des ersten Bügels bilden, beträgt 360 mm.

Der innere Abstand zwischen den beiden parallelen Seiten des ersten Bügels (2.1) beträgt 80 mm.

Die Lagervorrichtungen (5, 6) sind als Gleitlager ausgebildet.

Die beiden Positionierungsvorrichtungen (2, 4.1) sind in senkrecht zueinander ausgerichtet.

Die zweite Positionierungsvorrichtung (4.1) ist parallel zur Richtung des Schwerefeldes angeordnet und weist eine Schiene auf, deren V-förmiges Profil dazu geeignet ist, ein Rad zu führen.

Die Schiene weist eine Länge von 270 mm auf. Der Abstand zwischen dem Boden, auf dem sich die Vorrichtung zur stabilen Positionierung eines Rades befindet und dem unteren Ende der Schiene beträgt 120 mm.

Das Material, aus dem das erste Ausführungsbeispiel der Vorrichtung ausgebildet ist, umfasst rostfreien Stahl.

**Figur 4** zeigt eine Draufsicht des ersten Ausführungsbeispiels einer Vorrichtung zur stabilen Positionierung eines Rades (1.1b).

**Figur 5** zeigt eine Seitenansicht des zweiten Ausführungsbeispiels einer Vorrichtung zur stabilen Positionierung eines Rades mit einem Zweirad (1.2a), dessen Vorderrad stabil in der Vorrichtung positioniert ist, wobei die erste Positionierungsvorrichtung (2) mit auf einer ersten Drehachse liegenden Sicherungsmitteln (3) an einer ersten Lagervorrichtung (5) und einer zweiten Lagervorrichtung (6) drehbar gelagert ist und wobei die zweite Positionierungsvorrichtung (4.2) mit auf einer zweiten Drehachse liegenden Sicherungsmitteln (3) an einer ersten Lagervorrichtung (7) und einer zweiten Lagervorrichtung (8) drehbar gelagert ist, wobei die zweite Positionierungsvorrichtung (4.2) derart ausgebildet ist, dass diese genau zwei Auflagepunkte mit dem zu positionierenden Rad ausbildet und die erste Lagervorrichtung (7) und die zweite Lagervorrichtung (8) sich auf der zweiten Drehachse befinden. Das abgebildete Zweirad ist nicht Gegenstand der Erfindung.

Das zweite Ausführungsbeispiel der Vorrichtung weist einen ersten Rahmen (9) auf und die erste Lagervorrichtung (5) und die zweite Lagervorrichtung (6) der ersten Positionierungsvorrichtung (2) befinden sich im ersten Rahmen (9).

Das zweite Ausführungsbeispiel der Vorrichtung weist einen zweiten Rahmen (10) auf und die erste Lagervorrichtung (7) und die zweite Lagervorrichtung (8) der zweiten Positionierungsvorrichtung (4.2) befinden sich im zweiten Rahmen (10).

**Figur 6** zeigt eine Seitenansicht des zweiten Ausführungsbeispiels einer Vorrichtung zur stabilen Positionierung eines Rades (1.2.b).

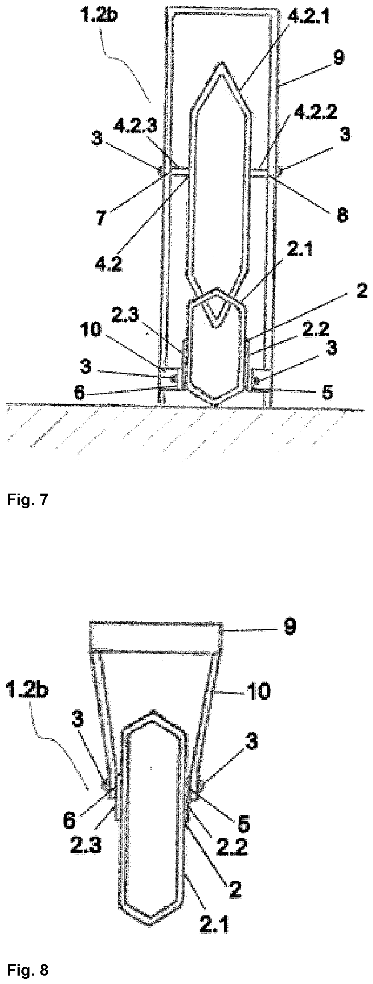

**Figur 7** zeigt eine Vorderansicht des zweiten Ausführungsbeispiels einer Vorrichtung zur stabilen Positionierung eines Rades (1.2.b). Dabei ist die erste Positionierungsvorrichtung (2) mit Sicherungsmitteln (3) an den zwei auf der ersten Drehachse liegenden Lagervorrichtungen (5, 6) drehbar gelagert. Die erste Positionierungsvorrichtung (2) umfasst einen durch ein konvexes erstes Sechseck gebildeten ersten Bügel (2.1), wobei zwei parallele Seiten des ersten Bügels (2.1) zwei gegenüberliegende Seiten des ersten Sechsecks bilden und jeweils zwei der übrigen vier Seiten des ersten Bügels (2.1) die Schenkel gleichschenkliger Dreiecke bilden, deren Spitzen sich spiegelbildlich gegenüberliegende Punkte des ersten Sechsecks bilden.

Die erste Positionierungsvorrichtung (2) umfasst ferner zwei Verbindungsstücke (2.2, 2.3), welche die zwei parallelen Seiten des ersten Bügels (2.1) mit den der ersten und der zweiten Lagervorrichtung (5, 6) verbinden.

Der innere Abstand zwischen den Ecken des ersten Bügels (2.1), welche jeweils Spitzen der gleichschenkligen Dreiecke bilden, deren Schenkel jeweils zwei der übrigen vier Seiten des ersten Bügels (2.1) bilden, beträgt 360 mm.

Der innere Abstand zwischen den beiden Seiten des ersten Bügels (2.1), die nicht Schenkel zuvor erwähnter gleichschenkliger Dreiecke bilden, beträgt 80 mm.

Die zweite Positionierungsvorrichtung (4.2) ist mit Sicherungsmitteln (3) an den zwei auf der zweiten Drehachse liegenden Lagervorrichtungen (7, 8) drehbar gelagert. Die zweite Positionierungsvorrichtung (4.2) umfasst einen durch ein konvexes zweites Sechseck gebildeten zweiten Bügel (4.2.1), wobei zwei parallele Seiten des zweiten Bügels (4.2.1) zwei gegenüberliegende Seiten des zweiten Sechsecks bilden und jeweils zwei der übrigen vier Seiten des zweiten Bügels (4.2.1) die Schenkel gleichschenkliger Dreiecke bilden, deren Spitzen sich spiegelbildlich gegenüberliegende Punkte des zweiten Sechsecks bilden.

Die zweite Positionierungsvorrichtung (4.2) umfasst ferner zwei Verbindungsstücke (4.2.2, 4.2.3), welche die zwei parallelen Seiten des zweiten Bügels (4.2.1) mit der ersten und der zweiten Lagervorrichtung (7 8) verbinden.

Die zweite Drehachse ist senkrecht zu den zwei parallelen Seiten des zweiten Bügels (4.2.1) und schneidet diese zwei Seiten des zweiten Bügels (4.2.1).

Der innere Abstand zwischen den Ecken des zweiten Bügels (4.2.1), welche jeweils Spitzen der gleichschenkligen Dreiecke bilden, deren Schenkel jeweils zwei der übrigen vier Seiten des zweiten Bügels (4.2.1) bilden, beträgt 460 mm.

Der innere Abstand zwischen den beiden parallelen Seiten des zweiten Bügels (4.2.1) beträgt 80 mm.

Die Lagervorrichtungen (5, 6, 7, 8) sind als Gleitlager ausgebildet.

Die beiden Positionierungsvorrichtungen (2, 4.2) sind in senkrecht zueinander ausgerichtet.

Die zweite Positionierungsvorrichtung (4.2) ist parallel zur Richtung des Schwerefeldes angeordnet.

Das Material, aus dem das zweite Ausführungsbeispiel der Vorrichtung ausgebildet ist, umfasst rostfreien Stahl.

**Figur 8** zeigt eine Draufsicht des zweiten Ausführungsbeispiels einer Vorrichtung zur stabilen Positionierung eines Rades (1.2b).

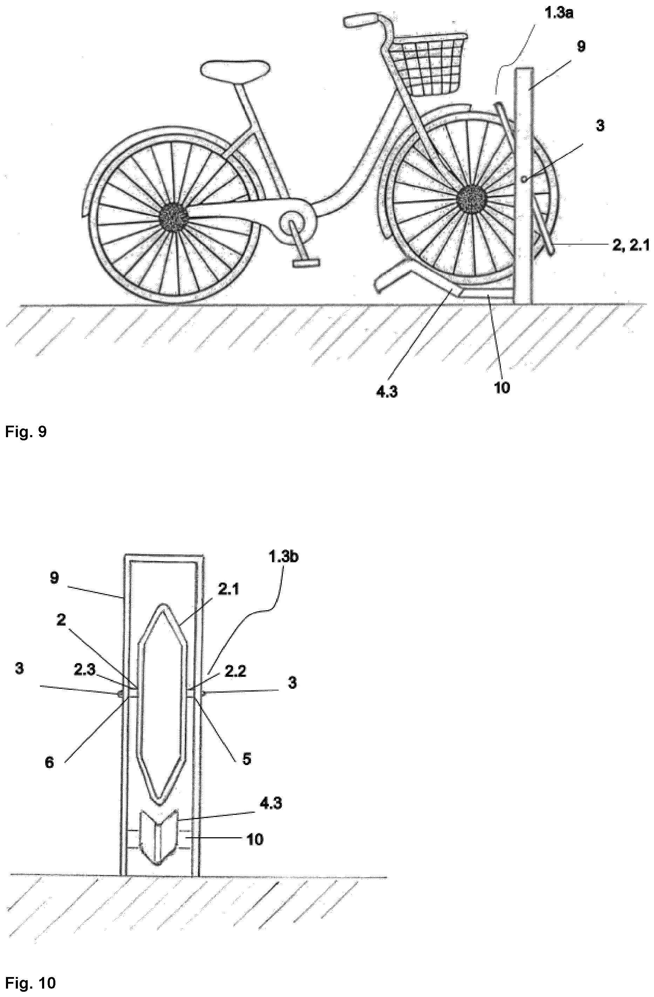

**Figur 9** zeigt eine Seitenansicht des dritten Ausführungsbeispiels einer Vorrichtung zur stabilen Positionierung eines Rades mit einem Zweirad (1.3a), dessen Vorderrad stabil in der Vorrichtung positioniert ist, wobei die erste Positionierungsvorrichtung (2) parallel zur Richtung des Schwerefeldes angeordnet ist und die zweite Positionierungsvorrichtung (4.3) eine Schiene mit einem V-förmigem Profil aufweist und wobei das abgebildete Zweirad nicht Gegenstand der Erfindung ist.

Das dritte Ausführungsbeispiel der Vorrichtung weist einen ersten Rahmen (9) auf und die erste Lagervorrichtung (5) und die zweite Lagervorrichtung (6) der ersten Positionierungsvorrichtung (2) befinden sich im ersten Rahmen (9).

Das dritte Ausführungsbeispiel der Vorrichtung weist einen zweiten Rahmen (10) auf und die zweite Positionierungsvorrichtung (4.3) ist unbeweglich am zweiten Rahmen (10) befestigt.

Die erste Positionierungsvorrichtung (2) ist mit Sicherungsmitteln (3) an den zwei auf der ersten Drehachse liegenden Lagervorrichtungen (5, 6) drehbar gelagert. Die erste Positionierungsvorrichtung (2) umfasst einen durch ein konvexes erstes Sechseck gebildeten ersten Bügel (2.1), wobei zwei parallele Seiten des ersten Bügels (2.1) zwei gegenüberliegende Seiten des ersten Sechsecks bilden und jeweils zwei der übrigen vier Seiten des ersten Bügels (2.1) die Schenkel gleichschenkliger Dreiecke bilden, deren Spitzen sich spiegelbildlich gegenüberliegende Punkte des zweiten Sechsecks bilden.

Die erste Positionierungsvorrichtung (2) umfasst ferner zwei Verbindungsstücke (2.2, 2.3), welche die zwei parallelen Seiten des ersten Bügels (2.1) mit der ersten und der zweiten Lagervorrichtung (5, 6) verbinden.

Die erste Drehachse ist senkrecht zu den zwei Seiten des ersten Bügels (2.1), die zwei der gegenüberliegenden Seiten des ersten Rechtecks bilden und schneidet diese zwei Seiten des ersten Bügels (2.1).

Der Schwerpunkt der ersten Positionierungsvorrichtung (2) liegt auf der ersten Drehachse.

Der innere Abstand zwischen den Ecken des ersten Bügels (2.1), welche jeweils Spitzen der gleichschenkligen Dreiecke des ersten Paares bilden, beträgt 460 mm.

Der innere Abstand zwischen den beiden Seiten des ersten Bügels (2.1), die sich gegenüberliegende Seiten des ersten Rechtecks bilden, beträgt 80 mm.

Die Lagervorrichtungen (5, 6) sind als Gleitlager ausgebildet.

Die beiden Positionierungsvorrichtungen (2, 4.3) sind in senkrecht zueinander ausgerichtet.

Die erste Positionierungsvorrichtung (2) ist parallel zur Richtung des Schwerefeldes angeordnet.

Im dritten Ausführungsbeispiel weist die Schiene der zweiten Positionierungsvorrichtungen (4.3) aus der Perspektive eines zu positionierenden Rades zunächst in einem ersten Abschnitt über eine Länge von 110 mm in einem Winkel von 33° bezüglich zur Horizontalen ansteigend, dann in einem zweiten Abschnitt über eine Länge von 160 mm in einem Winkel von 20° bezüglich zur Horizontalen absteigend und zuletzt in einem dritten Abschnitt über eine Länge von 150 mm in einem Winkel zwischen 0° und 35° bezüglich zur Horizontalen waagerecht oder ansteigend verläuft. Durch einen solchen Verlauf der Schiene wird verhindert, dass ein in der Vorrichtung positioniertes Zweirad nach hinten aus der Vorrichtung herausrollt.

Das Material, aus dem das dritte Ausführungsbeispiel der Vorrichtung ausgebildet ist, umfasst rostfreien Stahl.

**Figur 10** zeigt eine Vorderansicht des dritten Ausführungsbeispiels einer Vorrichtung zur stabilen Positionierung eines Rades (1.3b).

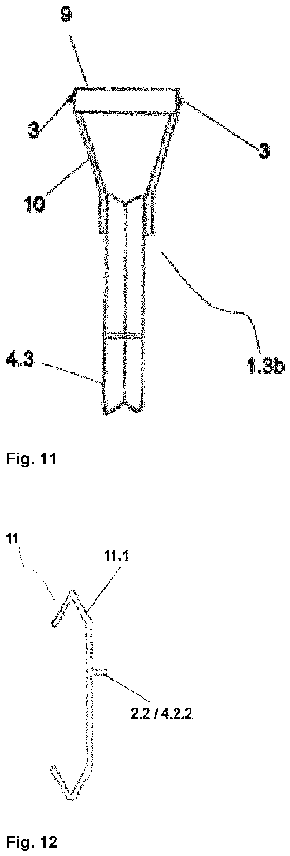

**Figur 11** zeigt eine Draufsicht des dritten Ausführungsbeispiels einer Vorrichtung zur stabilen Positionierung eines Rades (1.3b).

**Figur 12** zeigt eine erste oder zweite Positionierungsvorrichtung (11) mit Bügel zweiter Konstruktionsart (11.1) und dem ersten Verbindungsstück der ersten Positionierungsvorrichtung (2.2) oder dem ersten Verbindungsstück der zweiten Positionierungsvorrichtung (4.2.2)

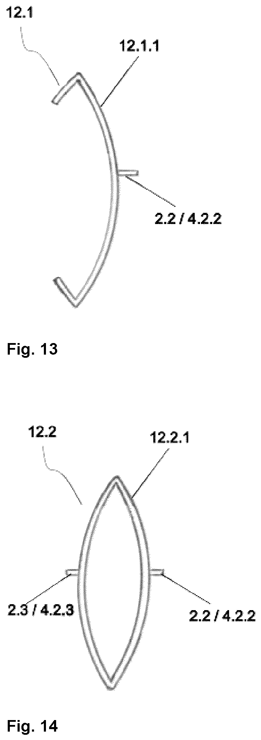

**Figur 13** zeigt eine erste oder zweite Positionierungsvorrichtung (12.1) mit Bügel dritter Konstruktionsart (12.1.1) und dem ersten Verbindungsstück der ersten Positionierungsvorrichtung (2.2) oder dem ersten Verbindungsstück der zweiten Positionierungsvorrichtung (4.2.2).

**Figur 14** zeigt eine erste oder zweite Positionierungsvorrichtung (12.2) mit Bügel vierter Konstruktionsart (12.2.1), dem ersten Verbindungsstück der ersten Positionierungsvorrichtung (2.2) oder dem ersten Verbindungsstück der zweiten Positionierungsvorrichtung (4.2.2) und dem zweiten Verbindungsstück der ersten Positionierungsvorrichtung (2.3) oder dem zweiten Verbindungsstück der zweiten Positionierungsvorrichtung (4.2.3)

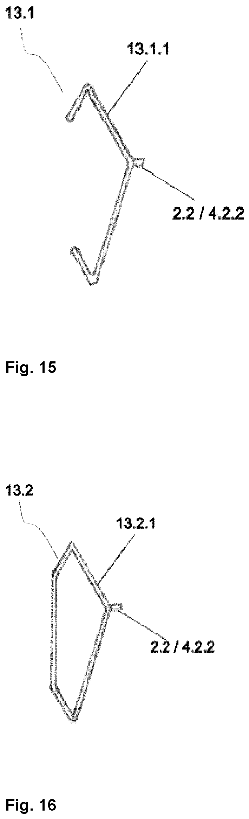

**Figur 15** zeigt eine erste oder zweite Positionierungsvorrichtung (13.1) mit Bügel fünfter Konstruktionsart (13.1.1) und dem ersten Verbindungsstück der ersten Positionierungsvorrichtung (2.2) oder dem ersten Verbindungsstück der zweiten Positionierungsvorrichtung (4.2.2).

**Figur 16** zeigt eine erste oder zweite Positionierungsvorrichtung (13.2) mit Bügel sechster Konstruktionsart (12.2.1) und dem ersten Verbindungsstück der ersten Positionierungsvorrichtung (2.2) oder dem ersten Verbindungsstück der zweiten Positionierungsvorrichtung (4.2.2).

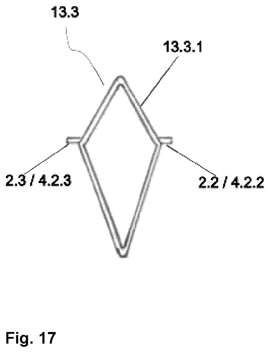

**Figur 17** zeigt eine erste oder zweite Positionierungsvorrichtung (13.3) mit Bügel siebenter Konstruktionsart (13.3.1) dem ersten Verbindungsstück der ersten Positionierungsvorrichtung (2.2) oder dem ersten Verbindungsstück der zweiten Positionierungsvorrichtung (4.2.2) und dem zweiten Verbindungsstück der ersten Positionierungsvorrichtung (2.3) oder dem zweiten Verbindungsstück der zweiten Positionierungsvorrichtung (4.2.3)

### Bezugszeichen

- 1: Vorrichtung zur stabilen Positionierung eines Rades
- 1.1a: Erstes Ausführungsbeispiel einer Vorrichtung zur stabilen Positionierung eines Rades mit einem darin stabil positionierten Zweirad
- 1.1b: Erstes Ausführungsbeispiel einer Vorrichtung zur stabilen Positionierung eines Rades
- 1.2a: Zweites Ausführungsbeispiel einer Vorrichtung zur stabilen Positionierung eines Rades mit einem darin stabil positionierten Zweirad
- 1.2b: Zweites Ausführungsbeispiel einer Vorrichtung zur stabilen Positionierung eines Rades
- 1.3a: Drittes Ausführungsbeispiel einer Vorrichtung zur stabilen Positionierung eines Rades mit einem darin stabil positionierten Zweirad
- 1.3b: Drittes Ausführungsbeispiel einer Vorrichtung zur stabilen Positionierung eines Rades
- 2: Erste Positionierungsvorrichtung
- 2.1: Erster Bügel
- 2.2: Erstes Verbindungsstück der ersten Positionierungsvorrichtung
- 2.3: Zweites Verbindungsstück der ersten Positionierungsvorrichtung
- 3: Sicherungsmittel
- 4: Zweite Positionierungsvorrichtung
- 4.1: Zweite Positionierungsvorrichtung des ersten Ausführungsbeispiels
- 4.2: Zweite Positionierungsvorrichtung des zweiten Ausführungsbeispiels
- 4.2.1: Zweiter Bügel
- 4.2.2: Erstes Verbindungsstück der zweiten Positionierungsvorrichtung
- 4.2.3: Zweites Verbindungsstück der zweiten Positionierungsvorrichtung
- 4.3: Zweite Positionierungsvorrichtung des dritten Ausführungsbeispiels
- 5: Erste Lagervorrichtung für die erste Positionierungsvorrichtung
- 6: Zweite Lagervorrichtung für die erste Positionierungsvorrichtung
- 7: Erste Lagervorrichtung für die zweite Positionierungsvorrichtung
- 8: Zweite Lagervorrichtung für die zweite Positionierungsvorrichtung
- W: Weitere Lagervorrichtungen
- 9: Erster Rahmen
- 10: Zweiter Rahmen
- 11: Positionierungsvorrichtung mit Bügel zweiter Konstruktionsart
- 11.1: Bügel zweiter Konstruktionsart
- 12.1: Positionierungsvorrichtung mit Bügel dritter Konstruktionsart
- 12.1.1: Bügel dritter Konstruktionsart
- 12.2: Positionierungsvorrichtung mit Bügel vierter Konstruktionsart
- 12.2.1: Bügel vierter Konstruktionsart
- 13.1: Positionierungsvorrichtung mit Bügel fünfter Konstruktionsart
- 13.1.1: Bügel fünfter Konstruktionsart
- 13.2: Positionierungsvorrichtung mit Bügel sechster Konstruktionsart
- 13.2.1: Bügel sechster Konstruktionsart
- 13.3: Positionierungsvorrichtung mit Bügel siebenter Konstruktionsart
- 13.3.1: Bügel siebenter Konstruktionsart
- P: Pfosten

## Patentansprüche

1. Vorrichtung zur stabilen Positionierung eines Rades (1) umfassend:
- Zumindest eine erste Lagervorrichtung (5) für eine erste Positionierungsvorrichtung (2)
- Zumindest eine erste Positionierungsvorrichtung (2) des Rades, wobei die erste Positionierungsvorrichtung (2) mit der ersten Lagervorrichtung (5) für die erste Positionierungsvorrichtung (2) verbunden ist und um eine erste Drehachse beweglich ist, wobei die erste Positionierungsvorrichtung (2) derart ausgebildet ist, dass diese genau zwei Auflagepunkte mit dem zu positionierenden Rad ausbildet, und die erste Lagervorrichtung (5) für die erste Positionierungsvorrichtung (2) sich auf der ersten Drehachse befindet
- eine zweite Positionierungsvorrichtung (4) zur Positionierung des Rades.

2. Vorrichtung (1) nach Anspruch 1, **dadurch gekennzeichnet, dass** diese zumindest eine zweite Lagervorrichtung (6) für die erste Positionierungsvorrichtung (2) aufweist und die erste Positionierungsvorrichtung (2) mit der zweiten Lagervorrichtung (6) für die erste Positionierungsvorrichtung (2) verbunden ist, wobei die zweite Lagervorrichtung (6) für die erste Positionierungsvorrichtung (2) auf der ersten Drehachse liegt.

3. Vorrichtung (1) nach Anspruch 1 oder 2, **dadurch gekennzeichnet, dass** die zweite Positionierungsvorrichtung (4) derart ausgebildet ist, dass diese höchstens zwei Auflagepunkte mit dem zu positionierenden Rad ausbildet.

4. Vorrichtung (1) nach einem der vorhergehenden Ansprüche, **dadurch gekennzeichnet, dass** sie zumindest eine erste Lagervorrichtung (7) für die zweite Positionierungsvorrichtung (4) aufweist, wobei die erste Lagervorrichtung (7) für die zweite Positionierungsvorrichtung (4) mit der zweiten Positionierungsvorrichtung (4) verbunden ist, die zweite Positionierungsvorrichtung (4) um eine zweite Drehachse beweglich ist, wobei die zweite Positionierungsvorrichtung (4) derart ausgebildet ist, dass diese genau zwei Auflagepunkte mit dem zu positionierenden Rad ausbildet und die erste Lagervorrichtung (7) für die zweite Positionierungsvorrichtung (4) sich auf der zweiten Drehachse befindet.

5. Vorrichtung (1) nach Anspruch 4, **dadurch gekennzeichnet, dass** sie zumindest eine zweite Lagervorrichtung (8) für die zweite Positionierungsvorrichtung (4) aufweist, wobei die zweite Positionierungsvorrichtung (4) mit der zweiten Lagervorrichtung (8) für die zweite Positionierungsvorrichtung (4) verbunden ist und wobei die zweite Lagervorrichtung (8) für die zweite Positionierungsvorrichtung (4) auf der zweiten Drehachse liegt.

6. Vorrichtung (1) nach einem der vorhergehenden Ansprüche, **dadurch gekennzeichnet, dass** diese einen ersten Rahmen (9) aufweist und die erste Lagervorrichtung (5) für die erste Positionierungsvorrichtung (2) sich im ersten Rahmen (9) befindet.

7. Vorrichtung (1) nach Anspruch 6, **dadurch gekennzeichnet, dass** die zweite Lagervorrichtung (6) für die erste Positionierungsvorrichtung (2) sich im ersten Rahmen (9) befindet.

8. Vorrichtung (1) nach einem der Ansprüche 1 bis 3, 6 oder 7, **dadurch gekennzeichnet, dass** diese einen zweiten Rahmen (10) aufweist und die zweite Positionierungsvorrichtung (4) unbeweglich am zweiten Rahmen (10) befestigt ist.

9. Vorrichtung (1) nach einem der Ansprüche 4 bis 7 **dadurch gekennzeichnet, dass** diese einen zweiten Rahmen (10) aufweist und die erste Lagervorrichtung (7) für die zweite Positionierungsvorrichtung (4) sich im zweiten Rahmen (10) befindet.

10. Vorrichtung (1) nach Anspruch 9 **dadurch gekennzeichnet, dass** die zweite Lagervorrichtung (8) für die zweite Positionierungsvorrichtung (4) sich im zweiten Rahmen (10) befindet.

11. Vorrichtung (1) nach einem der Ansprüche 1 bis 3 oder 6 bis 8, **dadurch gekennzeichnet, dass** die zweite Positionierungsvorrichtung (4) eine Schiene aufweist, deren Profil dazu geeignet ist, ein Rad zu führen.

12. Vorrichtung (1) nach einem der vorhergehenden Ansprüche, **dadurch gekennzeichnet, dass**
- die erste Lagervorrichtung (5) für die erste Positionierungsvorrichtung (2) und/oder
- die zweite Positionierungsvorrichtung (4) unbeweglich an
einer Wand angeordnet ist.

13. Vorrichtung (1) nach einem der vorhergehenden Ansprüche, **dadurch gekennzeichnet, dass** diese mindestens einen Pfosten (P) aufweist und die erste Lagervorrichtung (5) für die erste Positionierungsvorrichtung (2) am Pfosten (P) angeordnet ist oder die zweite Positionierungsvorrichtung (4) unbeweglich am Pfosten (P) angeordnet ist.

14. Vorrichtung (1) nach einem der vorhergehenden Ansprüche, **dadurch gekennzeichnet, dass** die erste Positionierungsvorrichtung (2) und/oder die zweite Positionierungsvorrichtung (4) dazu ausgelegt ist, dass ein Reifen eines in der Vorrichtung (1) zu positionierenden Rades durch seinen Reifendruck in die Positionierungsvorrichtung festklemmbar ist und dabei das Rad kraftschlüssig in der Vorrichtung (1) positionierbar ist.

15. Vorrichtung (1) nach einem der vorhergehenden Ansprüche, **dadurch gekennzeichnet, dass** die erste Positionierungsvorrichtung (2) und/oder die zweite Positionierungsvorrichtung (4) mindestens ein Dehnungsmittel aufweist, welches dazu ausgelegt ist, die erste Positionierungsvorrichtung (2) und/oder die zweite Positionierungsvorrichtung (4) entlang einer Richtung zu dehnen, die parallel zur Radebene des in die Vorrichtung (1) zu positionierenden Rades ist.

16. Verwendung einer Vorrichtung (1) nach einem der vorhergehenden Ansprüche zur stabilen Positionierung eines Rades.
